(19) Europäisches Patentamt
European Patent Office
Office européen des brevets

(11) **EP 4 729 896 A1**

(12) **EUROPEAN PATENT APPLICATION**

(43) Date of publication:
**22.04.2026 Bulletin 2026/17**

(21) Application number: **25208170.8**

(22) Date of filing: **13.10.2025**

(51) International Patent Classification (IPC):
**G01H 3/12** *(2006.01)*      **G01S 3/808** *(2006.01)*

(52) Cooperative Patent Classification (CPC):
**G01H 3/125; G01S 3/8083**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(30) Priority: **16.10.2024 IN 202421078734**

(71) Applicant: **Tata Consultancy Services Limited Maharashtra (IN)**

(72) Inventors:
• **SWAIN, Amit**
  **700160 Kolkata (IN)**
• **BISWAS, Mayukh**
  **700160 Kolkata (IN)**
• **RAKSHIT, Raj**
  **700160 Kolkata (IN)**
• **BHAUMIK, Chirabrata**
  **700160 Kolkata (IN)**

(74) Representative: **Goddar, Heinz J.**
  **Boehmert & Boehmert**
  **Anwaltspartnerschaft mbB**
  **Pettenkoferstrasse 22**
  **80336 München (DE)**

(54) **METHODS AND SYSTEMS FOR MULTI-FREQUENCY FUSION FOR LOCALIZATION OF IMPACT INDUCED SOUNDWAVES OF TARGET MACHINE**

(57)    The disclosure generally relates to methods and systems for multi-frequency fusion for localization of impact induced soundwaves of a target industrial machine. Conventional wideband beamforming-based techniques accurately localize the impact hotspots, however with increased computational time while beamforming-based techniques reduce the computation time but worsens the localization accuracy. In the present disclosure, a composite acoustic map and a single-tone acoustic map of each of the one or more single frequencies obtained at each predefined frequency interval, are generated based on geometric parameters and a characteristic sound signal. Then, the one or more localization regions associated with each experimental trail that are common to the composite acoustic map and the single-tone acoustic map are determined. Lastly an optimal frequency range is determined using a localization loss function, a Kalman filtering technique, and a probability distribution function based on the localization regions, for localization of impact hotspots.

(A) 1 ball, h=44cm     (A) 1 ball, h=27cm     (C) 1 ball, h=17cm

(D) 2 ball, h=44cm     (E) 2 ball, h=27cm     (F) 2 ball, h=17cm

FIG. 7

**Description**

CROSS-REFERENCE TO RELATED APPLICATIONS AND PRIORITY

The present application claims priority from Indian provisional application no. 202421078734, filed on October 16, 2024.

TECHNICAL FIELD

The disclosure herein generally relates to impact localization of an industrial machine, and, more particularly, to methods and systems for multi-frequency fusion for localization of impact induced soundwaves of a target machine.

BACKGROUND

Non-contact localization of impact hotspots in industrial machines such as crushers, grinding mills, hydro cyclones, centrifugal pumps, etc., has been a subject of interest over the recent few decades. Conventional acoustic beamforming-based techniques for the non-contact localization of impact hotspots in industrial machines have been implemented, but with a caveat for the accuracy and computation time. Conventional wideband beamforming-based techniques accurately localizes the impact hotspots (also referred as 'impact induced sound waves'), however at the cost of increased computational time due to the repeated matrix operations over a wide frequency range. On the other hand, conventional beamforming-based techniques at a single frequency drastically reduce the computation time but worsens the accuracy of localization of the impact hotspots. Additionally, the search space of the steering vector in the conventional beamforming-based techniques at a single frequency affects the efficiency of beamforming to a great extent.

SUMMARY

Embodiments of the present disclosure present technological improvements as solutions to one or more of the above-mentioned technical problems recognized by the inventors in conventional systems.

In an aspect, a processor-implemented method for multi-frequency fusion for localization of impact induced soundwaves of a target machine provided. The method including the steps of: receiving (i) one or more geometric parameters, (ii) a characteristic sound signal, and (iii) cut-off frequency intervals at which the wideband beamforming is performed, of a target machine, wherein the cut-off frequency intervals comprise a lower bound frequency and an upper bound frequency; generating (i) a composite acoustic map, and (ii) a single-tone acoustic map of each of the one or more single frequencies obtained at each predefined frequency interval of the one or more predefined frequency intervals from the cut-off frequency intervals, based on the one or more geometric parameters and the characteristic sound signal, using a wideband beamforming technique; determining one or more localization regions for each experimental trail of one or more experimental trails based on a predefined segmentation threshold using a segmentation and grouping technique, wherein the one or more localization regions associated with each experimental trail are common to the composite acoustic map and the single-tone acoustic map of each of the one or more single frequencies obtained at each predefined frequency interval; evaluating a value of a localization loss function at each predefined frequency interval for each experimental trail of the one or more experimental trails, using the one or more localization regions associated with each experimental trail; calculating a normalized sum value of the localization loss function at each predefined frequency interval after the one or more experimental trails are completed, based on the value of the localization loss function at each predefined frequency interval for each experimental trail; determining an optimal frequency range of the target machine, based on the normalized sum value of the localization loss function at each predefined frequency interval, using a Kalman filtering technique and a probability distribution function; receiving (i) the one or more geometric parameters, and (ii) a real-time continuous sound signal, of the target machine whose impact induced soundwaves is to be localized; and determining a localized impact acoustic map of the target machine in real-time, based on (i) the one or more geometric parameters, and (ii) the real-time continuous sound signal, and (iii) the optimal frequency range, wherein the localized impact acoustic map is used for localizing the impact induced soundwaves of the target machine.

In another aspect, a system for multi-frequency fusion for localization of impact induced soundwaves of a target machine is provided. The system includes: a memory storing instructions; one or more Input/Output (I/O) interfaces; and one or more hardware processors coupled to the memory via the one or more I/O interfaces, wherein the one or more hardware processors are configured by the instructions to: receive (i) one or more geometric parameters, (ii) a characteristic sound signal, and (iii) cut-off frequency intervals at which the wideband beamforming is performed, of a target machine, wherein the cut-off frequency intervals comprise a lower bound frequency and an upper bound frequency; generate (i) a composite acoustic map, and (ii) a single-tone acoustic map of each of the one or more single frequencies obtained at each predefined frequency interval of the one or more predefined frequency intervals from the cut-off frequency intervals, based on the one or more geometric parameters and the characteristic sound signal, using a wideband beamforming technique; determine one or more localization regions for each experimental trail of one or more experimental trails based on a predefined segmentation threshold using a segmentation and grouping technique, wherein the one or more localization regions associated with each experimental trail are common to the composite acoustic map and the single-tone acoustic map of each of the one or more single frequencies obtained at each predefined frequency interval; evaluate a value of a localization loss function at each predefined frequency interval for each experimental trail of the one or more experimental trails, using the one or more localization regions associated with each experimental trail; calculate a normalized sum value of the localization loss function at each predefined frequency interval after the one or more experimental trails are completed, based on the value of the localization loss function at each predefined frequency interval for each experimental trail; determine an optimal frequency range of the target machine, based on the normalized sum value of the localization loss function at each predefined frequency interval, using a Kalman filtering technique and a probability distribution function; receive (i) the one or more geometric parameters, and (ii) a real-time continuous sound signal, of the target machine whose impact induced soundwaves is to be localized; and determine a localized impact acoustic map of the target machine in real-time, based on (i) the one or more geometric parameters, and (ii) the real-time continuous sound signal, and (iii) the optimal frequency range, wherein the localized impact acoustic map is used for localizing the impact induced soundwaves of the target machine.

In yet another aspect, there are provided one or more non-transitory machine-readable information storage mediums comprising one or more instructions which when executed by one or more hardware processors cause: receiving (i) one or more geometric parameters, (ii) a characteristic sound signal, and (iii) cut-off frequency intervals at which the wideband beamforming is performed, of a target machine, wherein the cut-off frequency intervals comprise a lower bound frequency and an upper bound frequency; generating (i) a composite acoustic map, and (ii) a single-tone acoustic map of each of the one or more single frequencies obtained at each predefined frequency interval of the one or more predefined frequency intervals from the cut-off frequency intervals, based on the one or more geometric parameters and the characteristic sound signal, using a wideband beamforming technique; determining one or more localization regions for each experimental trail of one or more experimental trails based on a predefined segmentation threshold using a segmentation and grouping technique, wherein the one or more localization regions associated with each experimental trail are common to the composite acoustic map and the single-tone acoustic map of each of the one or more single frequencies obtained at each predefined frequency interval; evaluating a value of a localization loss function at each predefined frequency interval for each experimental trail of the one or more experimental trails, using the one or more localization regions associated with each experimental trail; calculating a normalized sum value of the localization loss function at each predefined frequency interval after the one or more experimental trails are completed, based on the value of the localization loss function at each predefined frequency interval for each experimental trail; determining an optimal frequency range of the target machine, based on the normalized sum value of the localization loss function at each predefined frequency interval, using a Kalman filtering technique and a probability distribution function; receiving (i) the one or more geometric parameters, and (ii) a real-time continuous sound signal, of the target machine whose impact induced soundwaves is to be localized; and determining a localized impact acoustic map of the target machine in real-time, based on (i) the one or more geometric parameters, and (ii) the real-time continuous sound signal, and (iii) the optimal frequency range, wherein the localized impact acoustic map is used for localizing the impact induced soundwaves of the target machine.

In an embodiment, the one or more hardware processors (104) are configured to evaluate the value of the localization loss function based on a harmonic sum of absolute difference between an intensity weighted normalized centroid and a normalized density over each of the one or more localization regions associated with each experimental trail.

In an embodiment, the localization loss function ($\psi(f)$) is mathematically represented by a relation:

$$\psi(f) = \sum_{L \in I_c, I_f} \frac{1}{|r_c - r_f| + |D_c - D_f|}$$

where r, D are the intensity weighted normalized centroid and the normalized density of the one or more localization regions L that are common to the composite acoustic map ($I_c$), and the single-tone acoustic map ($I_f$) associated with each experimental trail.

In an embodiment, the optimal frequency range is determined by: applying the Kalman filtering technique over the normalized sum value of the localization loss function at each predefined frequency interval, to obtain an optimal sum value of the localization loss function at each predefined frequency interval; calculating a similarity value at each predefined frequency interval using a probability distribution function over the optimal sum value of the localization loss function associated with each predefined frequency interval; and determining the optimal frequency range, based on (i) a mode frequency and (ii) a mean absolute deviation, of the similarity value at each predefined frequency interval.

It is to be understood that both the foregoing general description and the following detailed description are exemplary and explanatory only and are not restrictive of the invention, as claimed.

BRIEF DESCRIPTION OF THE DRAWINGS

The accompanying drawings, which are incorporated in and constitute a part of this disclosure, illustrate exemplary embodiments and, together with the description, serve to explain the disclosed principles:

FIG. 1 is an exemplary block diagram of a system for multi-frequency fusion for localization of impact induced soundwaves of a target machine, in accordance with some embodiments of the present disclosure.
FIGS. 2A and 2B illustrate exemplary flow diagrams of a processor-implemented method for multi-frequency fusion for localization of impact induced soundwaves of a target machine, using the system of FIG. 1, in accordance with some embodiments of the present disclosure.
FIG. 3 is a flow diagram showing steps for determining an optimal frequency range, based on the normalized sum value of the localization loss function at each predefined frequency interval, in accordance with some embodiments of the present disclosure.
FIG. 4 shows an exemplary experimental setup comprising a square metal plate of an exemplary target industrial machine whose impact induced soundwaves is to be localized, in accordance with some embodiments of the present disclosure.
FIG. 5 shows results of the wideband beamforming with variation with number of sources, in accordance with some embodiments of the present disclosure.
FIG. 6 shows results of the wideband beamforming for variation in height/standoff distance, in accordance with some embodiments of the present disclosure.
FIG. 7 shows results of the probability distribution for different experiments, in accordance with some embodiments of the present disclosure.
FIGS. 8A and 8B show comparison results of the present disclosure with a conventional multiple signal classification (MUSIC) approach.

DETAILED DESCRIPTION OF EMBODIMENTS

Exemplary embodiments are described with reference to the accompanying drawings. In the figures, the left-most digit(s) of a reference number identifies the figure in which the reference number first appears. Wherever convenient, the same reference numbers are used throughout the drawings to refer to the same or like parts. While examples and features of disclosed principles are described herein, modifications, adaptations, and other implementations are possible without departing from the scope of the disclosed embodiments.

Non-contact localization of impact hotspots (interchangeably used hereafter as 'impact induced sound waves' and 'impact wears') in industrial machines such as crushers, grinding mills, hydro cyclones, centrifugal pumps, etc., remains a daunting problem. The impact hotspots may take place due to percussive and dynamic impact on the machine's surface by another solid body, resulting in unpredictable breakdown and downtime of the industrial machine. There are many conventional contact-based sensing techniques proposed in the art for localization of impact hotspots. However, these contact-based sensing techniques fall short when issues like structural integrity of the industrial machine, original equipment manufacturer (OEM) warranty restrictions and damage to the sensor head. Thus, a non-contact impact localization technique is necessary.

Conventional Direction of Arrival (DOA) estimation techniques (algorithms) help find the direction of a sound source using a microphone array for the impact hotspots localization. While these have been employed for narrow band sounds (speech, periodic sounds), wideband and short-lived impact hotspots (sounds) pose additional challenges in localization. Out of the presently used DOA estimation techniques, conventional beamforming-based techniques have been used for industrial machine monitoring, owing to the high localization accuracy of multiple sound sources. Apart from the benefits, the conventional beamforming techniques need wide search-space in spatial and frequency domains to generate high resolution high accuracy acoustic images, only increases the burden on computational resources. Additionally, existing literature has presented the acoustic images either in polar coordinates, or with respect to the mic plane, in Cartesian coordinates. This can be a non-trivial problem to an operator of the industrial machine, who may rather have a one-to-one mapping of the acoustic image onto the surface of interest of the industrial machine structure.

Applicant of the present disclosure has proposed a unique approach using a wideband 2-dimensional (2-D) beamforming algorithm called a wideband multiple signal classification (MUSIC) approach that can localize noncoherent impact sound waves (sources) accurately. But aside from the localization accuracy, the computation time is a critical performance parameter in the practical settings. While some industrial processes can accommodate a longer computation time, others are time-critical in nature and demand faster machine inspection (e.g. jaw crushers, mills etc.).

The present disclosure solves the technical problems in the art for the non-contact localization of impact hotspots in the industrial machine (interchangeably used hereafter as a target machine), using a multi-frequency fusion. The methods and systems of the present disclosure reduce the computation time whilst preserving the impact localization accuracy. The primary objective of the present disclosure is to reduce the computation time but at the same time maintain the accuracy and the efficiency in the localization of the impact hotspots. The contributions of the present disclosure are as follows:

(i) The multi-frequency fusion which provides high localization accuracy, while reducing the frequency range of computation, and
(ii) Projection of the beamforming output on the target machine surface, to identify impact hotspots.

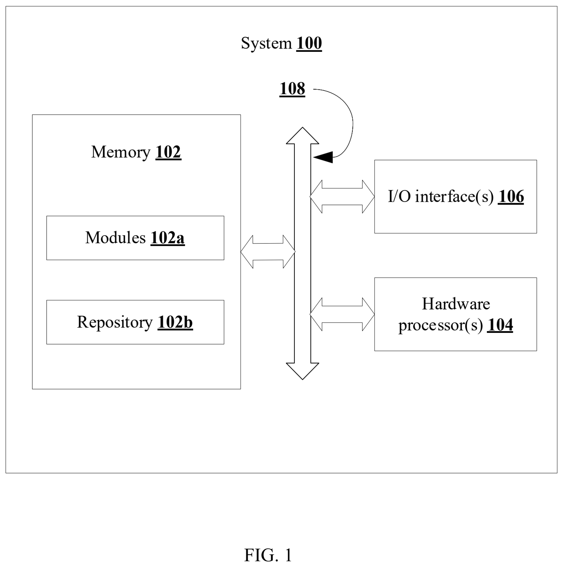

Referring now to the drawings, and more particularly to FIG. 1 through FIG. 8B, where similar reference characters denote corresponding features consistently throughout the figures, there are shown preferred embodiments, and these embodiments are described in the context of the following exemplary systems and/or methods.

FIG. 1 is an exemplary block diagram of a system 100 for multi-frequency fusion for localization of impact induced soundwaves of the target machine, in accordance with some embodiments of the present disclosure. In an embodiment, the system 100 includes or is otherwise in communication with one or more hardware processors 104, communication interface device(s) or input/output (I/O) interface(s) 106, and one or more data storage devices or memory 102 operatively coupled to the one or more hardware processors 104. The one or more hardware processors 104, the memory 102, and the I/O interface(s) 106 may be coupled to a system bus 108 or a similar mechanism.

The I/O interface(s) 106 may include a variety of software and hardware interfaces, for example, a web interface, a graphical user interface, and the like. The I/O interface(s) 106 may include a variety of software and hardware interfaces, for example, interfaces for peripheral device(s), such as a keyboard, a mouse, an external memory, a plurality of sensor devices, a printer and the like. Further, the I/O interface(s) 106 may enable the system 100 to communicate with other devices, such as web servers and external databases.

The I/O interface(s) 106 can facilitate multiple communications within a wide variety of networks and protocol types, including wired networks, for example, local area network (LAN), cable, etc., and wireless networks, such as Wireless LAN (WLAN), cellular, or satellite. For the purpose, the I/O interface(s) 106 may include one or more ports for connecting a number of computing systems with one another or to another server computer. Further, the I/O interface(s) 106 may include one or more ports for connecting a number of devices to one another or to another server.

The one or more hardware processors 104 may be implemented as one or more microprocessors, microcomputers, microcontrollers, digital signal processors, central processing units, state machines, logic circuitries, and/or any devices that manipulate signals based on operational instructions. Among other capabilities, the one or more hardware processors 104 are configured to fetch and execute computer-readable instructions stored in the memory 102. In the context of the present disclosure, the expressions 'processors' and 'hardware processors' may be used interchangeably. In an embodiment, the system 100 can be implemented in a variety of computing systems, such as laptop computers, portable computers, notebooks, hand-held devices, workstations, mainframe computers, servers, a network cloud and the like.

The memory 102 may include any computer-readable medium known in the art including, for example, volatile memory, such as static random access memory (SRAM) and dynamic random access memory (DRAM), and/or non-volatile memory, such as read only memory (ROM), erasable programmable ROM, flash memories, hard disks, optical disks, and magnetic tapes. In an embodiment, the memory 102 includes a plurality of modules 102a and a repository 102b for storing data processed, received, and generated by one or more of the plurality of modules 102a. The plurality of modules 102a may include routines, programs, objects, components, data structures, and so on, which perform particular tasks or implement particular abstract data types.

The plurality of modules 102a may include programs or computer-readable instructions or coded instructions that supplement applications or functions performed by the system 100. The plurality of modules 102a may also be used as, signal processor(s), state machine(s), logic circuitries, and/or any other device or component that manipulates signals based on operational instructions. Further, the plurality of modules 102a can be used by hardware, by computer-readable instructions executed by the one or more hardware processors 104, or by a combination thereof. In an embodiment, the plurality of modules 102a can include various sub-modules (not shown in FIG. 1). Further, the memory 102 may include information pertaining to input(s)/output(s) of each step performed by the processor(s) 104 of the system 100 and methods of the present disclosure.

The repository 102b may include a database or a data engine. Further, the repository 102b amongst other things, may serve as a database or includes a plurality of databases for storing the data that is processed, received, or generated as a result of the execution of the plurality of modules 102a. Although the repository 102b is shown internal to the system 100, it will be noted that, in alternate embodiments, the repository 102b can also be implemented external to the system 100, where the repository 102b may be stored within an external database (not shown in FIG. 1) communicatively coupled to the system 100. The data contained within such external database may be periodically updated. For example, data may be added into the external database and/or existing data may be modified and/or non-useful data may be deleted from the external database. In one example, the data may be stored in an external system, such as a Lightweight Directory Access Protocol (LDAP) directory and a Relational Database Management System (RDBMS). In another embodiment, the data stored in the repository 102b may be distributed between the system 100 and the external database.

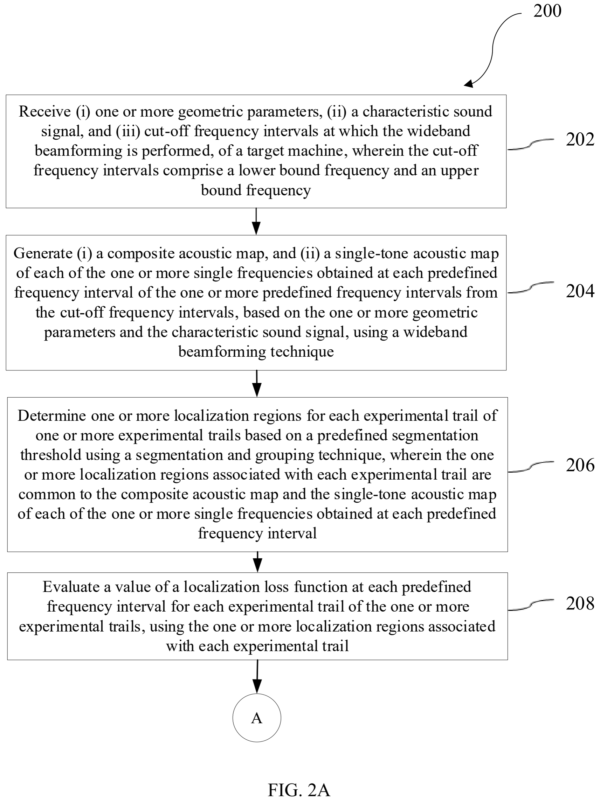

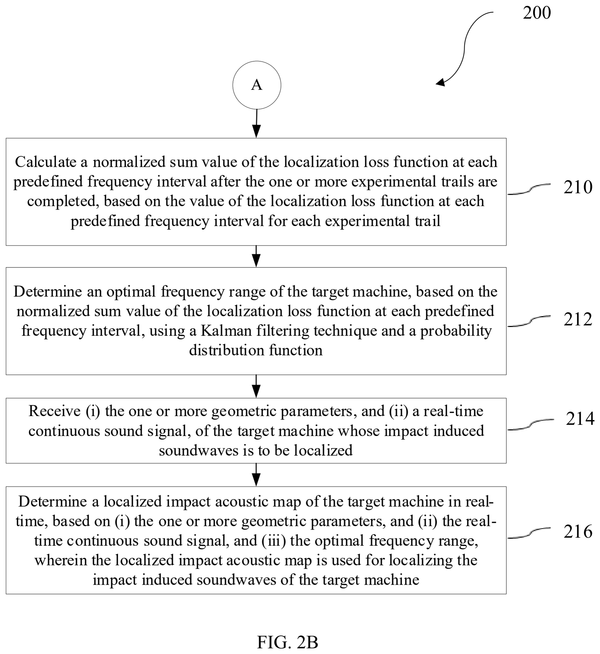

Referring to FIGS. 2A and 2B, components and functionalities of the system 100 are described in accordance with an example embodiment of the present disclosure. For example, FIGS. 2A and 2B illustrate exemplary flow diagrams of a processor-implemented method 200 for multi-frequency fusion for localization of impact induced soundwaves of a target machine, using the system 100 of FIG. 1, in accordance with some embodiments of the present disclosure. Although the steps of the method 200 shown in FIGS. 2A and 2B including process steps, method steps, techniques or the like may be described in a sequential order, such processes, methods, and techniques may be configured to work in alternate orders. In other words, any sequence or order of steps that may be described does not necessarily indicate a requirement that the steps be performed in that order. The steps of processes described herein may be performed in any practical order. Further, some steps may be performed simultaneously, or some steps may be performed alone or independently.

At step 202 of the method 200, the one or more hardware processors 104 of the system 100 are configured to receive (i) one or more geometric parameters, (ii) a characteristic sound signal $(s(t))$, and (iii) cut-off frequency intervals $(f_L, f_H)$ at which the wideband beamforming is performed, of the target machine. The one or more geometric parameters are the dimensional parameters of the target machine include but are not limited to a length of the target machine, a height of the target machine, a diameter of the target machine, a radius of the target machine, an area of the target machine, and the height at which the target machine is mounted.

In accordance with the present disclosure, the characteristic sound signal $(s(t))$ is a sound signal or a sound wave of the target machine under the running state having one or more impact hotspots that may occur at any time. Further, the cut-off frequency intervals $(f_L, f_H)$ are used for performing the wideband beamforming over the characteristic sound signal $(s(t))$ of the target machine. In an embodiment, the cut-off frequency intervals $(f_L, f_H)$ include a lower bound frequency $(f_L)$ and an upper bound frequency $(f_H)$. More specifically, the wideband beamforming is performed over the characteristic sound signal $(s(t))$ between the lower bound frequency $(f_L)$ and the upper bound frequency $(f_H)$.

At step 204 of the method 200, the one or more hardware processors 104 of the system 100 are configured to generate (i) a composite acoustic map $(I_c)$ and (ii) a single-tone acoustic map $(I_f)$ of each of the one or more single frequencies $(f)$ obtained at each predefined frequency interval $(\Delta f)$ of the one or more predefined frequency intervals $(\Delta f)$ from the cut-off frequency intervals $(f_L, f_H)$. The composite acoustic map $(I_c)$, and the single-tone acoustic map $(I_f)$ of each of the one or more single frequencies are generated based on the one or more geometric parameters and the characteristic sound signal $(s(t))$ received at step 202 of the method 200, using a wideband beamforming technique.

For example, if the lower bound frequency $(f_L)$ is 100 Hz and the upper bound frequency $(f_H)$ is 4000 Hz, and the one or more predefined frequency intervals interval $(\Delta f)$ are 100 Hz, 200 Hz, 300 Hz...., 1000 Hz, then:

(i) The one or more single frequencies obtained $(f)$ at the predefined frequency interval $(\Delta f)$ 100 Hz are: {100 Hz, 200 Hz, 300 Hz...., 4000 Hz},
(ii) The one or more single frequencies obtained $(f)$ at the predefined frequency interval $(\Delta f)$ 200 Hz are: {100 Hz, 300 Hz, 500 Hz...., 3900 Hz}, and
(iii) Similarly, the one or more single frequencies $(f)$ obtained at the predefined frequency interval $(\Delta f)$ 1000 Hz are: {100 Hz, 1100 Hz, 2100 Hz...., 3100 Hz}.

Thus, the composite acoustic map $(I_c)$ is generated for the entire cut-off frequency intervals $(f_L, f_H)$, whereas the single-tone acoustic map $(I_f)$ is generated at each of the one or more single frequencies $(f)$ (for example, {100 Hz, 200 Hz, 300 Hz...., 4000 Hz}) obtained at each predefined frequency interval $(\Delta f)$ (for example, at 100 Hz).

In an embodiment, the wideband beamforming technique is explained using below mathematical equations (1)-(4):

$$V(\theta_k, \phi_k) = \left[ exp\left( j2\pi \frac{fR}{c_s} \sin \phi_k \times \cos\left( \theta_k - \frac{2\pi(i-1)}{M} \right) \right) \right]^T \qquad (1)$$

$$X = VCV^H, U_nX = 0 \qquad (2)$$

$$p_f(\theta, \phi) = \frac{1}{\left| V^H(\theta,\phi)U_nU_n^H(\theta,\phi)V \right|} \qquad (3)$$

$$p_c(\theta, \phi) = \sum_{f_L}^{f_H} \frac{p_f(\theta,\phi)}{\max(p_f)} \qquad (4)$$

Here, V is a matrix of steering vectors $V(\theta, \phi)$, C is the covariance of the signal $(s(t))$ of rank N (N subspaces), X is the zero padded covariance matrix of rank M (M microphones), $U_n$ is the noise subspace, $c_s$ is the speed of sound. Since noise subspace is orthogonal to the signal subspace, eq. 2 becomes 0. While eq. 3 provides the spatial power map $p_f(\theta, \phi)$ for a single frequency f, a high-resolution high accuracy wideband composite acoustic image $p_c(\theta, \phi)$ can be obtained by fusion of multi-frequency images (eq. 4). When the values of $f_L$, $f_H$ are far apart for a given frequency interval $\Delta f$, it is called wideband beamforming.

In accordance with the present disclosure, the target machine specific steering vectors are proposed to reduce the search space, where only the directions significant to the machine surface are considered.

$$r_\varepsilon = \sqrt{x^2 + y^2 + z^2}, \theta_\varepsilon = \tan^{-1}(y/x), \phi_\varepsilon = \tan^{-1}(z/r) \qquad (5)$$

The geometrical parameters of the target machine structure are used for finding the surface equation $\varepsilon(x, y, z)$. Subsequently the surface equation of the target machine structure is defined in polar coordinates after a cartesian to polar coordinate transform (equation (5)). The steering vector matrix $V(\theta_\varepsilon, \phi_\varepsilon)$ is initialized only for the azimuth and elevation angles significant to the machine surface $\varepsilon$. Once the spatial power maps $p_c$, $p_f$ are obtained, the acoustic maps ($I_c$, $I_f$) can be projected onto the mic array plane, and subsequently on the target machine structure ($I_c'$) using the inverse transforms of equation (5).

At step 206 of the method 200, the one or more hardware processors 104 of the system 100 are configured to determine one or more localization regions for each experimental trail of one or more experimental trails. In an embodiment, a number of the one or more experimental trails is predefined and the one or more localization regions are determined for each experimental trail. For example, the number of the one or more experimental trails is 27.

In accordance with the present disclosure, a segmentation and grouping technique is employed over the composite acoustic map ($I_c$) and the single-tone acoustic map ($I_f$) of each of the one or more single frequencies (f) obtained at each predefined frequency interval ($\Delta f$) that are generated at step 204 of the method 200. More specifically, the one or more localization regions associated with each experimental trail are the regions that are common to both the composite acoustic map ($I_c$) and the single-tone acoustic map ($I_f$) of each of the one or more single frequencies (f) obtained at each predefined frequency interval ($\Delta f$). Further, a predefined segmentation threshold is used in the segmentation and grouping technique to restrict the number of segmentations in the acoustic maps. In an embodiment, the predefined segmentation threshold is 0.85.

At step 208 of the method 200, the one or more hardware processors 104 of the system 100 are configured to evaluate a value of a localization loss function ($\psi(f)$) at each predefined frequency interval ($\Delta f$) for each experimental trail of the one or more experimental trails. The one or more localization regions associated with each experimental trail are utilized to evaluate the value of the localization loss function ($\psi(f)$) at each predefined frequency interval ($\Delta f$) associated with each experimental trail. The localization loss function ($\psi(f)$) is used to define a closeness measure between the composite acoustic map ($I_c$) and the and the single-tone acoustic map ($I_f$) of each of the one or more single frequencies (f) (single-tone acoustic maps) obtained at each predefined frequency interval ($\Delta f$).

In accordance with the present disclosure, the value of the localization loss function ($\psi(f)$) is evaluated based on a harmonic sum of absolute difference between intensity weighted normalized centroids ($r_c$, $r_f$) and normalized density ($D_c$, $D_f$) over each of the one or more localization regions associated with each experimental trail.

While wideband beamforming provides high accuracy high resolution acoustic maps, not all frequencies contribute to the composite acoustic map ($I_c$). For example, for each experimental trial, there may be 1 composite acoustic map ($I_c$), and multiple single-tone acoustic maps ($I_f$) distributed over f. During the training state (v = 1), the acoustic maps (image pairs) ($I_c$, $I_f$) are accumulated over some of the number of the experimental trails (for example, 18 out of 27 experimental trials for 1 ball experiment, and 7 out of 10 trials for 2 ball experiments), while wideband beamforming is active.

In accordance with the present disclosure, the localization loss function ($\psi(f)$) for each experimental trail is mathematically represented by a relation:

$$\psi(f) = \sum_{L \in I_c, I_f} \frac{1}{|r_c - r_f| + |D_c - D_f|} \qquad (6)$$

where r, D are the intensity weighted normalized centroid and the normalized density of the one or more localization regions L that are common to the composite acoustic map ($I_c$), and the single-tone acoustic map ($I_f$) associated with each experimental trail.

At step 210 of the method 200, the one or more hardware processors 104 of the system 100 are configured to calculate a normalized sum value of the localization loss function for each experimental trail. The normalized sum value of the localization loss function for each experimental trail is calculated using the value of the localization loss function at each predefined frequency interval of the one or more predefined frequency intervals, after the one or more experimental trails are completed for each experimental trail.

When the state is transitioned to the prediction state ($v = 2$), the localization loss function ($\psi(f)$) is summed over the individual experimental trials, as

$$\Psi(f) = \langle filt \left( \sum_{trials} \frac{\psi(f) - \min(\psi)}{\max(\psi) - \min(\psi)} \right) \rangle \qquad (7)$$

At step 212 of the method 200, the one or more hardware processors 104 of the system 100 are configured to determine an optimal frequency range of the target machine, based on the normalized sum value of the localization loss function at each predefined frequency interval at step 210 of the method 200. A Kalman filtering technique and a probability distribution function (PDF) are employed to determine the optimal frequency range of the target machine.

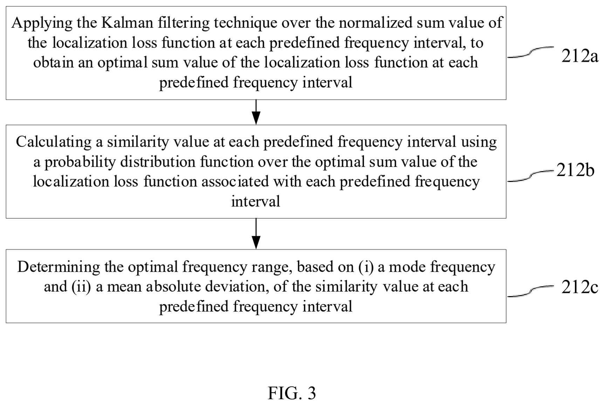

FIG. 3 is a flow diagram showing steps for determining the optimal frequency range, based on the normalized sum value of the localization loss function at each predefined frequency interval, in accordance with some embodiments of the present disclosure. As shown in FIG. 3, determining the optimal frequency range, based on the normalized sum value of the localization loss function at each predefined frequency interval ($\Delta f$) is explained through steps 212a to 212c.

At step 212a, the Kalman filtering technique is applied over the normalized sum value of the localization loss function at each predefined frequency interval ($\Delta f$) calculated at step 210 of the method 200, to obtain an optimal sum value of the localization loss function at each predefined frequency interval ($\Delta f$).

At step 212b, a similarity value at each predefined frequency interval ($\Delta f$) is calculated using a probability distribution function over the optimal sum value of the localization loss function associated with each predefined frequency interval ($\Delta f$) obtained at step 212a.

At step 212c, the optimal frequency range is then determined based on (i) a mode frequency ($f_{mode}$) and (ii) a mean absolute deviation ($\sigma$), of the similarity value at each predefined frequency interval ($\Delta f$) calculated at step 212b.

The filtering operation in equation (7) ensures that a region of high probability is picked over random peaks in later stage. The $\langle \rangle$ operator in equation (7) represents normalization of the area undercurve, so that $\psi(f)$ becomes a probability distribution. As a high probability region in $\Psi(f)$ is interested, the mode frequency $f_{mode}$ is a good choice of central tendency which can be defined as:

$$f_{mode} = argmax(\Psi) \qquad (8)$$

The frequency deviation from $f_{mode}$ is provided by the mean absolute deviation (MAD) ($\sigma$) of $f$, which is defined as:

$$\sigma = \sum_{f_1}^{f_M} |f - f_{mode}| \times \Psi(f) \Delta_f \qquad (9)$$

Where $\Delta_f$ in equation (9) is the frequency interval. The summation limits in equation (4) can be replaced by $f_{mode} - \sigma/2$, $f_{mode} + \sigma/2$ which brings down the frequency range of computation as compared to wideband beamforming. Therefore, in prediction state ($v = 2$), the acoustic map is obtained over a reduced frequency range which is thus the optimal frequency range for the given target machine.

In accordance with the present disclosure, the steps 202 to 212 of the method 200 are performed as one time activity to determine the optimal frequency range for the given target machine. Once the optimal frequency range is known, the given target machine can be monitored in real-time based on the sound signal *(s(t))* of the target machine for localization of the impact induced soundwaves.

At step 214 of the method 200, the one or more hardware processors 104 of the system 100 are configured to receive (i) the one or more geometric parameters, and (ii) a real-time continuous sound signal *(s(t))* of the target machine whose impact induced soundwaves is to be localized. The one or more geometric parameters of the target machine are same as mentioned at step 202 of the method 200. The real-time continuous sound signal *(s(t))* is the sound signal of the target machine received in real-time. In an embodiment, the real-time continuous sound signal *(s(t))* may be acquired through one or more sound acquisition devices such as microphones.

At step 216 of the method 200, the one or more hardware processors 104 of the system 100 are configured to determine a localized impact acoustic map of the target machine in real-time, based on the one or more geometric parameters, and the real-time continuous sound signal *(s(t))* received at step 214 of the method 200 and the optimal frequency range that is already determined at step 212 of the method 200. As explained, the localized impact acoustic map is used for localizing the impact induced soundwaves of the target machine in real-time.

According to the methods and systems of the present disclosure, the data-driven multi-frequency fusion (single frequencies and frequency intervals) solves the technical problems in the art for the non-contact localization of impact hotspots in the industrial machine. The methods and systems of the present disclosure reduce the computation time whilst preserving the impact localization accuracy. The primary objective of the present disclosure is to reduce the computation time but at the same time maintain the accuracy and the efficiency in the localization of the impact hotspots. Example Scenario:

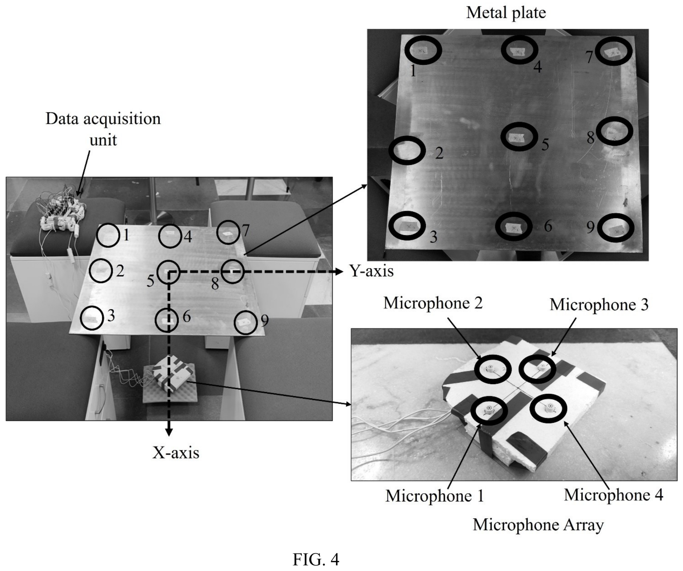

Experimental set up: FIG. 4 shows an exemplary experimental setup comprising a square metal plate of an exemplary target industrial machine whose impact induced soundwaves is to be localized, in accordance with some embodiments of the present disclosure. As shown in FIG. 4, the exemplary experimental setup includes the square metal plate of the exemplary target industrial machine, a data acquisition unit, and a microphone array (4-mic array) comprising four microphones (microphone 1, microphone 2, microphone 3, and microphone 4).

The square metal plate of side 64cm was kept above a 4-mic array at heights h=44cm,27cm, and 17 cm with respect to the mic array. Impact sounds (impact induced sound waves) on different annotated locations on the square metal plate were made with 1 ball, and simultaneously with 2 balls. The four audio channels (microphone 1, microphone 2, microphone 3, and microphone 4) were collected with the data acquisition unit.

Experimental parameters: The frequency range of the cut-off frequency intervals for wideband beamforming was considered as the $f_L$ = 100Hz, $f_H$ = 4000Hz. The window length $W$ has been set to $W$=0.1s. The timestep has been set to $\Delta T$= 0.01s. The centroid (intensity weighted mean) of the localization regions in the acoustic maps has been chosen as a representative of the positional estimate for different beamforming methods. 18,7 experimental trials have been used for training state (v = 1), and 9,3 experimental trials (unseen data) have been used for prediction state (v = 2) for 1,2 ball experiments, respectively.

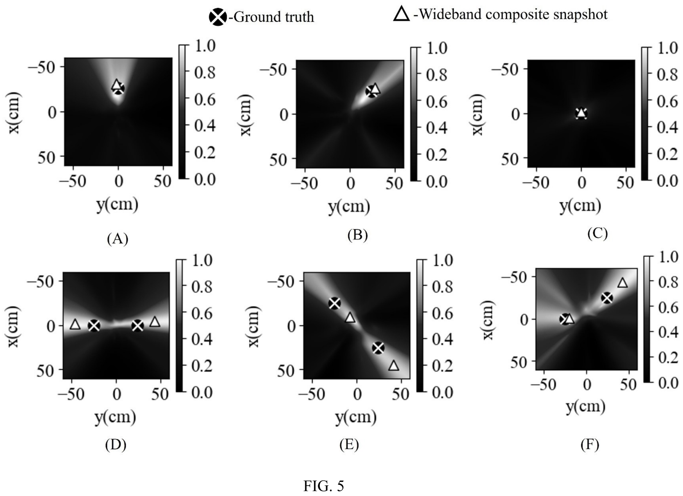

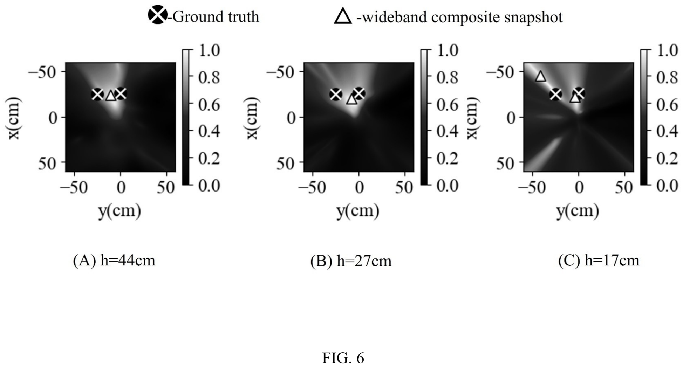

FIG. 5 shows results of the wideband beamforming with variation with number of sources, in accordance with some embodiments of the present disclosure. In FIG. 5, (A) and (C) are for 1 ball, and (D) and (F) are for 2 balls, with h=17cm. As shown in FIG. 5, it was observed that wideband beamforming localizes the impact source close to the ground truth. FIG. 6 shows results of the wideband beamforming for variation in height/standoff distance, in accordance with some embodiments of the present disclosure. As shown in FIG. 5, it was observed that the two closely spaced impact sources become more separable as the mic array moves close to the square metal plate.

Once the state transitions to $v$ = 2, the probability distribution $\psi(f)$, and subsequently $f_{mode}$, $\sigma$ were calculated explained at step 212c using equations (8) and (9). This reduced frequency range model (the optimal frequency range) has been obtained for experiments comprising of different heights $h$, and number of simultaneous ball hits.

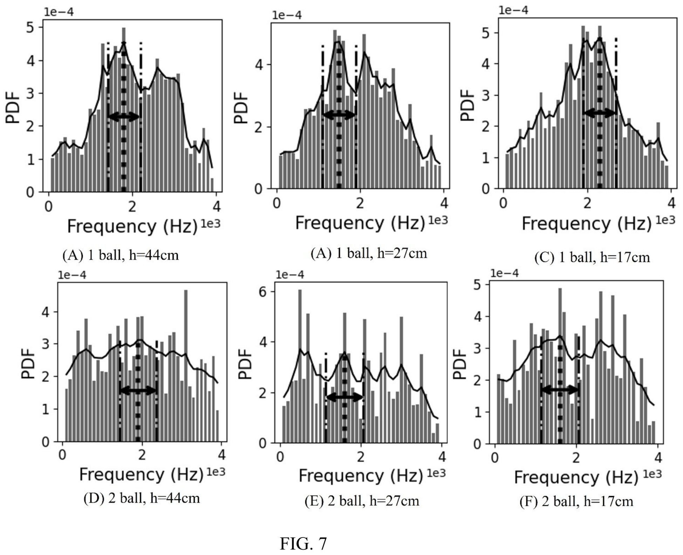

FIG. 7 shows results of the probability distribution ($\Psi(f)$), for different experiments, in accordance with some embodiments of the present disclosure. In FIG. 7, the bar plots represent the probability distribution ($\Psi(f)$) before filtering and normalization. In FIG. 7, the probability distribution ($\Psi(f)$) in (A) was at $f_{mode}$ = 1.8 $KHz$, and $\sigma$ = 780 $Hz$, the probability distribution ($\Psi(f)$) in (B) was at $f_{mode}$ = 1.5 $KHz$, and $\sigma$ = 807 $Hz$, the probability distribution ($\Psi(f)$) in (C) was at $f_{mode}$ = 12.3 $KHz$, and $\sigma$ = 777 $Hz$, the probability distribution ($\Psi(f)$) in (D) was at $f_{mode}$ = 1.9 $KHz$, and $\sigma$ = 930 $Hz$, the probability distribution ($\Psi(f)$) in (E) was at $f_{mode}$ = 1.6 $KHz$, and $\sigma$ = 926 $Hz$, the probability distribution ($\Psi(f)$) in (F) was at $f_{mode}$ = 1.6 $KHz$, and $\sigma$ = 923 $Hz$. From (A), (B) and (C) of FIG. 7, it can be observed that for 1 ball impact, the high frequency components become more prominent with decrease in $h$. In fact, the peaks in the bar plots in in (A), (B) and (C) can be attributed to the multiples of the standoff duration inverse ($1/t_{stand}$ = $f_{stand}$ = $h/c_s$).

Since the second multiple of $f_{stand}$ in case of (C) of FIG. 7 above 4kHz, only one prominent peak is visible. In the case of two ball impacts, it can be seen from (D), (E) and (F) of FIG. 7 that the peaks become more frequent. As in the previous case, the high frequency peaks become prominent when the microphone array is placed closer to the metal plate. The black curve in FIG. 7 represents the probability distribution $\Psi(f)$. The dotted vertical line represents $f_{mode}$, while the frequency interval around $f_{mode}$, shown by doubly arrowed line, represents the MAD ($\sigma$).

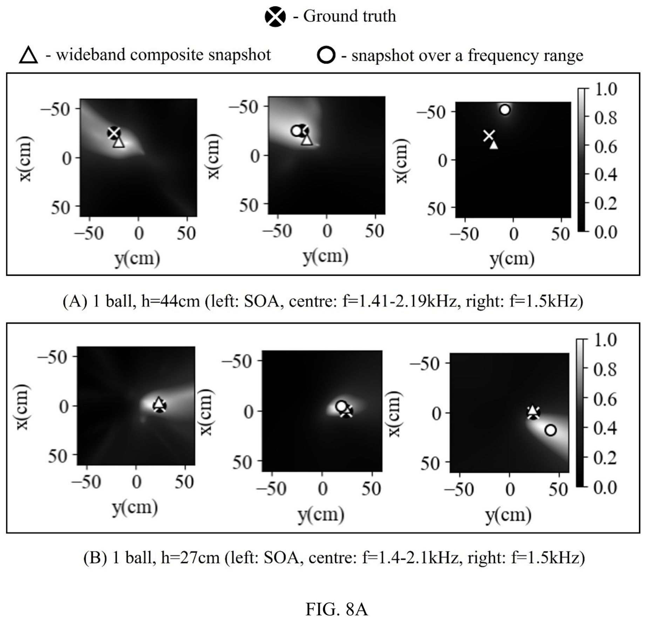

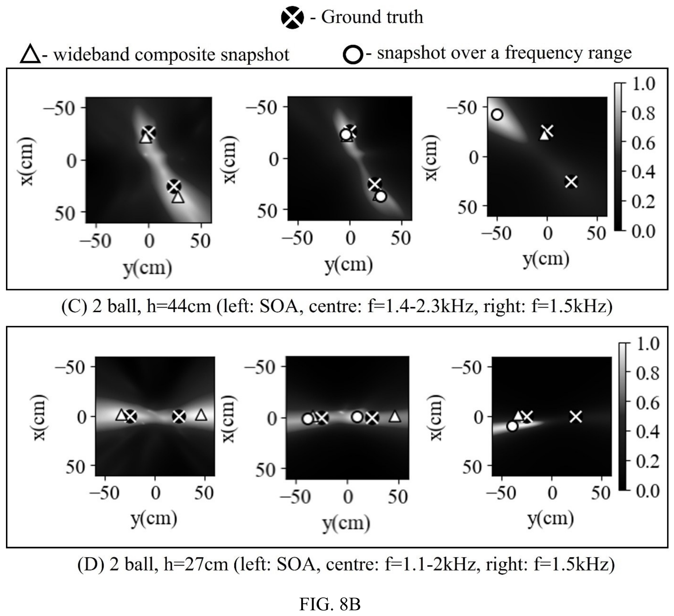

FIGS. 8A and 8B show comparison results of the present disclosure with a conventional multiple signal classification (MUSIC) approach. As shown in FIGS. 8A and 8B, the methods and systems of the present disclosure was compared with wideband MUSIC, and conventional MUSIC with single frequency ($f$ = 1.5kHz). It was observed through FIGS. 8A and 8B that the methods and systems of the present disclosure have a more compact and accurate localization region as compared to wideband MUSIC. This is due to the fact that the reduced frequency range contains single frequency acoustic maps which are closer to the true localization, in terms of position, and density. The discarded acoustic maps presented themselves as noise in the wideband MUSIC acoustic map, which is effectively removed from the proposed acoustic map.

Performance Metrics: Table 1 shows the performance metrics (viz. Root Mean Square Error (RMSE) and computation time) results of the present disclosure with a conventional multiple signal classification (MUSIC) approach. As shown in Table 1, the RMSE has been calculated as the root mean square of the normalized distance between the ground truth and the localization coordinates for each beamforming algorithm, over all trials in the test dataset. The time measurements correspond to a 64-bit system with Intel core i56500T 2.5GHz processor, 4GB RAM. It can be seen from Table 1 that a) compared with conventional MUSIC, the proposed method provides 4 folds better RMSE, at the cost of 2 folds computational time, b) compared with wideband MUSIC, the proposed method is 5 folds faster. Thus, the methods and systems of the present disclosure provide higher accuracy as compared to the conventional wideband MUSIC approach. This can be attributed to the choice of frequency range, which effectively reduces the noise floor, as compared to wideband MUSIC approach.

Table 1

| Metric | Wideband MUSIC (w/o F reduction) | Proposed ($\theta, \phi$ reduction + F reduction) | Conventional MUSIC (w/o $\theta, \phi$ reduction) |
|---|---|---|---|
| RMSE | 0.14 | 0.11 | 0.38 |
| Computation Time | 21.54s | 4.28s | 1.9s |

The written description describes the subject matter herein to enable any person skilled in the art to make and use the embodiments. The scope of the subject matter embodiments is defined by the claims and may include other modifications that occur to those skilled in the art. Such other modifications are intended to be within the scope of the claims if they have similar elements that do not differ from the literal language of the claims or if they include equivalent elements with insubstantial differences from the literal language of the claims.

The embodiments of present disclosure herein address unresolved problems of non-contact localization of impact hotspots in the industrial machine using the multi-frequency fusion. The multi-frequency fusion of the present disclosure provides high localization accuracy, while reducing the frequency range of computation (reduced or optimal frequency range) while performing the non-contact localization of impact hotspots in the industrial machine.

It is to be understood that the scope of the protection is extended to such a program and in addition to a computer-readable means having a message therein; such computer-readable storage means contain program-code means for implementation of one or more steps of the method, when the program runs on a server or mobile device or any suitable programmable device. The hardware device can be any kind of device which can be programmed including e.g., any kind of computer like a server or a personal computer, or the like, or any combination thereof. The device may also include means which could be e.g., hardware means like e.g., an application-specific integrated circuit (ASIC), a field-programmable gate array (FPGA), or a combination of hardware and software means, e.g., an ASIC and an FPGA, or at least one microprocessor and at least one memory with software processing components located therein. Thus, the means can include both hardware means, and software means. The method embodiments described herein could be implemented in hardware and software. The device may also include software means. Alternatively, the embodiments may be implemented on different hardware devices, e.g., using a plurality of CPUs.

The embodiments herein can comprise hardware and software elements. The embodiments that are implemented in software include but are not limited to, firmware, resident software, microcode, etc. The functions performed by various components described herein may be implemented in other components or combinations of other components. For the purposes of this description, a computer-usable or computer readable medium can be any apparatus that can comprise, store, communicate, propagate, or transport the program for use by or in connection with the instruction execution system, apparatus, or device.

The illustrated steps are set out to explain the exemplary embodiments shown, and it should be anticipated that ongoing technological development will change the manner in which particular functions are performed. These examples are presented herein for purposes of illustration, and not limitation. Further, the boundaries of the functional building blocks have been arbitrarily defined herein for the convenience of the description. Alternative boundaries can be defined so long as the specified functions and relationships thereof are appropriately performed. Alternatives (including equivalents, extensions, variations, deviations, etc., of those described herein) will be apparent to persons skilled in the relevant art(s) based on the teachings contained herein. Such alternatives fall within the scope of the disclosed embodiments. Also, the words "comprising," "having," "containing," and "including," and other similar forms are intended to be equivalent in meaning and be open ended in that an item or items following any one of these words is not meant to be an exhaustive listing of such item or items or meant to be limited to only the listed item or items. It must also be noted that as used herein and in the appended claims, the singular forms "a," "an," and "the" include plural references unless the context clearly dictates otherwise.

Furthermore, one or more computer-readable storage media may be utilized in implementing embodiments consistent with the present disclosure. A computer-readable storage medium refers to any type of physical memory on which information or data readable by a processor may be stored. Thus, a computer-readable storage medium may store instructions for execution by one or more processors, including instructions for causing the processor(s) to perform steps or stages consistent with the embodiments described herein. The term "computer-readable medium" should be understood to include tangible items and exclude carrier waves and transient signals, i.e., be non-transitory. Examples include random access memory (RAM), read-only memory (ROM), volatile memory, nonvolatile memory, hard drives, CD ROMs, DVDs, flash drives, disks, and any other known physical storage media.

It is intended that the disclosure and examples be considered as exemplary only, with a true scope of disclosed embodiments being indicated by the following claims.

**Claims**

1. A processor-implemented method (200), comprising :

receiving, via one or more input/output (I/O) interfaces, (i) one or more geometric parameters, (ii) a characteristic sound signal, and (iii) cut-off frequency intervals at which the wideband beamforming is performed, of a target machine, wherein the cut-off frequency intervals comprise a lower bound frequency and an upper bound frequency (202);
generating, via one or more hardware processors, (i) a composite acoustic map, and (ii) a single-tone acoustic map of each of the one or more single frequencies obtained at each predefined frequency interval of the one or more predefined frequency intervals from the cut-off frequency intervals, based on the one or more geometric parameters and the characteristic sound signal, using a wideband beamforming technique (204);
determining, via the one or more hardware processors, one or more localization regions for each experimental trail of one or more experimental trails based on a predefined segmentation threshold using a segmentation and grouping technique, wherein the one or more localization regions associated with each experimental trail are common to the composite acoustic map and the single-tone acoustic map of each of the one or more single frequencies obtained at each predefined frequency interval (206);
evaluating, via the one or more hardware processors, a value of a localization loss function at each predefined frequency interval for each experimental trail of the one or more experimental trails, using the one or more localization regions associated with each experimental trail (208);
calculating, via the one or more hardware processors, a normalized sum value of the localization loss function at each predefined frequency interval after the one or more experimental trails are completed, based on the value of the localization loss function at each predefined frequency interval for each experimental trail (210); and
determining, via the one or more hardware processors, an optimal frequency range of the target machine, based on the normalized sum value of the localization loss function at each predefined frequency interval, using a Kalman filtering technique and a probability distribution function (212).

2. The processor-implemented method as claimed in claim 1, further comprising:

receiving, via the one or more I/O interfaces, (i) the one or more geometric parameters, and (ii) a real-time continuous sound signal, of the target machine whose impact induced soundwaves is to be localized (214); and
determining, via the one or more hardware processors, a localized impact acoustic map of the target machine in real-time, based on (i) the one or more geometric parameters, and (ii) the real-time continuous sound signal, and (iii) the optimal frequency range, wherein the localized impact acoustic map is used for localizing the impact induced soundwaves of the target machine (216).

3. The processor-implemented method as claimed in claim 1, wherein the value of the localization loss function is evaluated based on a harmonic sum of absolute difference between an intensity weighted normalized centroid and a normalized density over each of the one or more localization regions associated with each experimental trail.

4. The processor-implemented method as claimed in claim 1, wherein the localization loss function ($\psi(f)$) is mathematically represented by a relation:

$$\psi(f) = \sum_{L \in I_c, I_f} \frac{1}{|r_c - r_f| + |D_c - D_f|}$$

where r, D are the intensity weighted normalized centroid and the normalized density of the one or more localization regions L that are common to the composite acoustic map ($I_c$), and the single-tone acoustic map ($I_f$) associated with each experimental trail.

5. The processor-implemented method as claimed in claim 1, wherein determining the optimal frequency range, based on the normalized sum value of the localization loss function at each predefined frequency interval, comprises:

applying the Kalman filtering technique over the normalized sum value of the localization loss function at each predefined frequency interval, to obtain an optimal sum value of the localization loss function at each predefined frequency interval (212a);
calculating a similarity value at each predefined frequency interval using a probability distribution function over the optimal sum value of the localization loss function associated with each predefined frequency interval (212b); and
determining the optimal frequency range, based on (i) a mode frequency and (ii) a mean absolute deviation, of the similarity value at each predefined frequency interval (212c).

6. A system (100), comprising:

a memory (102) storing instructions;
one or more input/output (I/O) interfaces (106); and
one or more hardware processors (104) coupled to the memory (102) via the one or more I/O interfaces (106), wherein the one or more hardware processors (104) are configured by the instructions to:

receive via the one or more I/O interfaces (106), (i) one or more geometric parameters, (ii) a characteristic sound signal, and (iii) cut-off frequency intervals at which the wideband beamforming is performed, of a target machine, wherein the cut-off frequency intervals comprise a lower bound frequency and an upper bound frequency;
generate (i) a composite acoustic map, and (ii) a single-tone acoustic map of each of the one or more single frequencies obtained at each predefined frequency interval of the one or more predefined frequency intervals from the cut-off frequency intervals, based on the one or more geometric parameters and the characteristic sound signal, using a wideband beamforming technique;
determine one or more localization regions for each experimental trail of one or more experimental trails based on a predefined segmentation threshold using a segmentation and grouping technique, wherein the one or more localization regions associated with each experimental trail are common to the composite acoustic map and the single-tone acoustic map of each of the one or more single frequencies obtained at each predefined frequency interval;
evaluate a value of a localization loss function at each predefined frequency interval for each experimental trail of the one or more experimental trails, using the one or more localization regions associated with each experimental trail;
calculate a normalized sum value of the localization loss function at each predefined frequency interval after the one or more experimental trails are completed, based on the value of the localization loss function at each predefined frequency interval for each experimental trail; and
determine an optimal frequency range of the target machine, based on the normalized sum value of the localization loss function at each predefined frequency interval, using a Kalman filtering technique and a probability distribution function.

7. The system as claimed in claim 6, wherein the one or more hardware processors (104) are further configured by the instructions to:

receive via the one or more I/O interfaces (106), (i) the one or more geometric parameters, and (ii) a real-time continuous sound signal, of the target machine whose impact induced soundwaves is to be localized; and
determine a localized impact acoustic map of the target machine in real-time, based on (i) the one or more geometric parameters, and (ii) the real-time continuous sound signal, and (iii) the optimal frequency range, wherein the localized impact acoustic map is used for localizing the impact induced soundwaves of the target machine.

8. The system as claimed in claim 6, wherein the one or more hardware processors (104) are configured to evaluate the value of the localization loss function based on a harmonic sum of absolute difference between an intensity weighted normalized centroid and a normalized density over each of the one or more localization regions associated with each experimental trail.

9. The system as claimed in claim 6, wherein the localization loss function ($\psi(f)$) is mathematically represented by a relation:

$$\psi(f) = \sum_{L \in I_c, I_f} \frac{1}{|r_c - r_f| + |D_c - D_f|}$$

where r, $D$ are the intensity weighted normalized centroid and the normalized density of the one or more localization regions L that are common to the composite acoustic map ($I_c$), and the single-tone acoustic map ($I_f$) associated with each experimental trail.

10. The system as claimed in claim 6, wherein the one or more hardware processors (104) are configured to determine the optimal frequency range, based on the normalized sum value of the localization loss function at each predefined frequency interval, by:

applying the Kalman filtering technique over the normalized sum value of the localization loss function at each predefined frequency interval, to obtain an optimal sum value of the localization loss function at each predefined frequency interval;
calculating a similarity value at each predefined frequency interval using a probability distribution function over the optimal sum value of the localization loss function associated with each predefined frequency interval; and
determining the optimal frequency range, based on (i) a mode frequency and (ii) a mean absolute deviation, of the similarity value at each predefined frequency interval.

11. One or more non-transitory machine-readable information storage mediums comprising one or more instructions which when executed by one or more hardware processors cause:

receiving (i) one or more geometric parameters, (ii) a characteristic sound signal, and (iii) cut-off frequency intervals at which the wideband beamforming is performed, of a target machine, wherein the cut-off frequency intervals comprise a lower bound frequency and an upper bound frequency;
generating (i) a composite acoustic map, and (ii) a single-tone acoustic map of each of the one or more single frequencies obtained at each predefined frequency interval of the one or more predefined frequency intervals from the cut-off frequency intervals, based on the one or more geometric parameters and the characteristic sound signal, using a wideband beamforming technique;
determining one or more localization regions for each experimental trail of one or more experimental trails based on a predefined segmentation threshold using a segmentation and grouping technique, wherein the one or more localization regions associated with each experimental trail are common to the composite acoustic map and the single-tone acoustic map of each of the one or more single frequencies obtained at each predefined frequency interval;
evaluating a value of a localization loss function at each predefined frequency interval for each experimental trail of the one or more experimental trails, using the one or more localization regions associated with each experimental trail;
calculating a normalized sum value of the localization loss function at each predefined frequency interval after the one or more experimental trails are completed, based on the value of the localization loss function at each predefined frequency interval for each experimental trail; and
determining an optimal frequency range of the target machine, based on the normalized sum value of the localization loss function at each predefined frequency interval, using a Kalman filtering technique and a probability distribution function.

12. The one or more non-transitory machine readable information storage mediums as claimed in claim 11, wherein the one or more instructions which when executed by one or more hardware processors further cause:

receiving (i) the one or more geometric parameters, and (ii) a real-time continuous sound signal, of the target machine whose impact induced soundwaves is to be localized; and
determining a localized impact acoustic map of the target machine in real-time, based on (i) the one or more geometric parameters, and (ii) the real-time continuous sound signal, and (iii) the optimal frequency range, wherein the localized impact acoustic map is used for localizing the impact induced soundwaves of the target machine.

13. The one or more non-transitory machine readable information storage mediums as claimed in claim 11, wherein the value of the localization loss function is evaluated based on a harmonic sum of absolute difference between an intensity weighted normalized centroid and a normalized density over each of the one or more localization regions associated with each experimental trail.

14. The one or more non-transitory machine readable information storage mediums as claimed in claim 11, wherein the localization loss function ($\psi(f)$) is mathematically represented by a relation:

$$\psi(f) = \sum_{L \in I_c, I_f} \frac{1}{|r_c - r_f| + |D_c - D_f|}$$

where r, *D* are the intensity weighted normalized centroid and the normalized density of the one or more localization regions L that are common to the composite acoustic map ($I_c$), and the single-tone acoustic map ($I_f$) associated with each experimental trail.

15. The one or more non-transitory machine readable information storage mediums as claimed in claim 11, wherein determining the optimal frequency range, based on the normalized sum value of the localization loss function at each predefined frequency interval, comprises:

applying the Kalman filtering technique over the normalized sum value of the localization loss function at each predefined frequency interval, to obtain an optimal sum value of the localization loss function at each predefined frequency interval;
calculating a similarity value at each predefined frequency interval using a probability distribution function over the optimal sum value of the localization loss function associated with each predefined frequency interval; and
determining the optimal frequency range, based on (i) a mode frequency and (ii) a mean absolute deviation, of the similarity value at each predefined frequency interval.

System **100**

**108**

Memory **102**

Modules **102a**

Repository **102b**

I/O interface(s) **106**

Hardware processor(s) **104**

FIG. 1

200

Receive (i) one or more geometric parameters, (ii) a characteristic sound signal, and (iii) cut-off frequency intervals at which the wideband beamforming is performed, of a target machine, wherein the cut-off frequency intervals comprise a lower bound frequency and an upper bound frequency

202

Generate (i) a composite acoustic map, and (ii) a single-tone acoustic map of each of the one or more single frequencies obtained at each predefined frequency interval of the one or more predefined frequency intervals from the cut-off frequency intervals, based on the one or more geometric parameters and the characteristic sound signal, using a wideband beamforming technique

204

Determine one or more localization regions for each experimental trail of one or more experimental trails based on a predefined segmentation threshold using a segmentation and grouping technique, wherein the one or more localization regions associated with each experimental trail are common to the composite acoustic map and the single-tone acoustic map of each of the one or more single frequencies obtained at each predefined frequency interval

206

Evaluate a value of a localization loss function at each predefined frequency interval for each experimental trail of the one or more experimental trails, using the one or more localization regions associated with each experimental trail

208

A

FIG. 2A

200

A

Calculate a normalized sum value of the localization loss function at each predefined frequency interval after the one or more experimental trails are completed, based on the value of the localization loss function at each predefined frequency interval for each experimental trail — 210

Determine an optimal frequency range of the target machine, based on the normalized sum value of the localization loss function at each predefined frequency interval, using a Kalman filtering technique and a probability distribution function — 212

Receive (i) the one or more geometric parameters, and (ii) a real-time continuous sound signal, of the target machine whose impact induced soundwaves is to be localized — 214

Determine a localized impact acoustic map of the target machine in real-time, based on (i) the one or more geometric parameters, and (ii) the real-time continuous sound signal, and (iii) the optimal frequency range, wherein the localized impact acoustic map is used for localizing the impact induced soundwaves of the target machine — 216

FIG. 2B

Applying the Kalman filtering technique over the normalized sum value of the localization loss function at each predefined frequency interval, to obtain an optimal sum value of the localization loss function at each predefined frequency interval

212a

Calculating a similarity value at each predefined frequency interval using a probability distribution function over the optimal sum value of the localization loss function associated with each predefined frequency interval

212b

Determining the optimal frequency range, based on (i) a mode frequency and (ii) a mean absolute deviation, of the similarity value at each predefined frequency interval

212c

FIG. 3

FIG. 4

FIG. 5

(A) h=44cm      (B) h=27cm      (C) h=17cm

FIG. 6

(A) 1 ball, h=44cm

(A) 1 ball, h=27cm

(C) 1 ball, h=17cm

(D) 2 ball, h=44cm

(E) 2 ball, h=27cm

(F) 2 ball, h=17cm

FIG. 7

(A) 1 ball, h=44cm (left: SOA, centre: f=1.41-2.19kHz, right: f=1.5kHz)

(B) 1 ball, h=27cm (left: SOA, centre: f=1.4-2.1kHz, right: f=1.5kHz)

FIG. 8A

- Ground truth

△ - wideband composite snapshot   ○ - snapshot over a frequency range

(C) 2 ball, h=44cm (left: SOA, centre: f=1.4-2.3kHz, right: f=1.5kHz)

(D) 2 ball, h=27cm (left: SOA, centre: f=1.1-2kHz, right: f=1.5kHz)

FIG. 8B

| | Europäisches Patentamt<br>European Patent Office<br>Office européen des brevets | **EUROPEAN SEARCH REPORT** | **Application Number**<br>EP 25 20 8170 |
|---|---|---|---|

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 2021/310856 A1 (STUART MICHAEL D [US] ET AL) 7 October 2021 (2021-10-07)<br>* abstract; figures 4,5,9,10 *<br>* paragraphs [0007], [0010], [0115], [0118], [0163] - [0170], [0237], [0238] * | 1-15 | INV.<br>G01H3/12<br>G01S3/808 |
| A | US 2022/203536 A1 (MACOSKEY JONATHAN JENNER [US] ET AL)<br>30 June 2022 (2022-06-30)<br>* abstract; figure 5B *<br>* paragraphs [0026] - [0029], [0036], [0040] - [0046] * | 1-15 | |
| T | BISWAS MAYUKH ET AL: "Unobtrusive Spatial Localization of Impact Induced Soundwaves using 2D Beamforming Algorithm",<br>2024 IEEE SENSORS, IEEE,<br>20 October 2024 (2024-10-20), pages 1-4,<br>XP034778729,<br>DOI: 10.1109/SENSORS60989.2024.10785148<br>[retrieved on 2024-12-17]<br>* the whole document * | 1,6,11 | |
| A | ERIC GRINSTEIN ET AL: "Steered Response Power for Sound Source Localization: A Tutorial Review",<br>ARXIV.ORG, CORNELL UNIVERSITY LIBRARY, 201 OLIN LIBRARY CORNELL UNIVERSITY ITHACA, NY 14853,<br>5 May 2024 (2024-05-05), XP091748306,<br>* abstract *<br>* page 8, column 1, line 39 - column 2, line 5 *<br>* page 13, column 1, line 44 - column 2, line 7 * | 1-15 | TECHNICAL FIELDS SEARCHED (IPC)<br><br>G01H<br>G01S |

-/--

The present search report has been drawn up for all claims

| Place of search | Date of completion of the search | Examiner |
|---|---|---|
| The Hague | 26 February 2026 | de Jong, Frank |

**EUROPEAN SEARCH REPORT**

Europäisches
Patentamt

European
Patent Office

Office européen
des brevets

Application Number

EP 25 20 8170

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | CHEN GUITONG ET AL: "Deep Learning Based Non-synchronous Sequential Measurement For Speech Localization", 2022 IEEE 12TH SENSOR ARRAY AND MULTICHANNEL SIGNAL PROCESSING WORKSHOP (SAM), IEEE, 20 June 2022 (2022-06-20), pages 161-165, XP034153611, DOI: 10.1109/SAM53842.2022.9827816 [retrieved on 2022-07-22] * abstract; figure 3 * * page 163, column 1, line 39 - column 2, line 25 * * page 164, column 1, lines 12-14 * ----- | 1-15 | |

TECHNICAL FIELDS
SEARCHED        (IPC)

The present search report has been drawn up for all claims

| Place of search | Date of completion of the search | Examiner |
|---|---|---|
| The Hague | 26 February 2026 | de Jong, Frank |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

&: member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 25 20 8170

This annex lists the patent family members relating to the patent documents cited in the above-mentioned European search report.
The members are as contained in the European Patent Office EDP file on
The European Patent Office is in no way liable for these particulars which are merely given for the purpose of information.

26-02-2026

| Patent document cited in search report | | Publication date | Patent family member(s) | | Publication date |
|---|---|---|---|---|---|
| US 2021310856 | A1 | 07-10-2021 | CN | 112703375 A | 23-04-2021 |
| | | | CN | 112703376 A | 23-04-2021 |
| | | | CN | 112739995 A | 30-04-2021 |
| | | | CN | 112739996 A | 30-04-2021 |
| | | | CN | 112739997 A | 30-04-2021 |
| | | | CN | 119309666 A | 14-01-2025 |
| | | | CN | 120947793 A | 14-11-2025 |
| | | | EP | 3827226 A1 | 02-06-2021 |
| | | | EP | 3827227 A1 | 02-06-2021 |
| | | | EP | 3827228 A1 | 02-06-2021 |
| | | | EP | 3827229 A1 | 02-06-2021 |
| | | | EP | 3827230 A1 | 02-06-2021 |
| | | | JP | 7403526 B2 | 22-12-2023 |
| | | | JP | 7417587 B2 | 18-01-2024 |
| | | | JP | 7488250 B2 | 21-05-2024 |
| | | | JP | 7493491 B2 | 31-05-2024 |
| | | | JP | 7804706 B2 | 22-01-2026 |
| | | | JP | 2021532355 A | 25-11-2021 |
| | | | JP | 2021532356 A | 25-11-2021 |
| | | | JP | 2021532357 A | 25-11-2021 |
| | | | JP | 2021532358 A | 25-11-2021 |
| | | | JP | 2021532359 A | 25-11-2021 |
| | | | JP | 2024041847 A | 27-03-2024 |
| | | | KR | 20210033532 A | 26-03-2021 |
| | | | KR | 20210034076 A | 29-03-2021 |
| | | | KR | 20210034661 A | 30-03-2021 |
| | | | KR | 20210035273 A | 31-03-2021 |
| | | | KR | 20210035881 A | 01-04-2021 |
| | | | US | 2021293953 A1 | 23-09-2021 |
| | | | US | 2021310856 A1 | 07-10-2021 |
| | | | US | 2021310857 A1 | 07-10-2021 |
| | | | US | 2021311187 A1 | 07-10-2021 |
| | | | US | 2021311188 A1 | 07-10-2021 |
| | | | US | 2024118416 A1 | 11-04-2024 |
| | | | US | 2024264305 A1 | 08-08-2024 |
| | | | US | 2025341635 A1 | 06-11-2025 |
| | | | US | 2025370128 A1 | 04-12-2025 |
| | | | WO | 2020023622 A1 | 30-01-2020 |
| | | | WO | 2020023627 A1 | 30-01-2020 |
| | | | WO | 2020023629 A1 | 30-01-2020 |
| | | | WO | 2020023631 A1 | 30-01-2020 |
| | | | WO | 2020023633 A1 | 30-01-2020 |
| US 2022203536 | A1 | 30-06-2022 | CN | 114690122 A | 01-07-2022 |
| | | | DE | 102021214782 A1 | 30-06-2022 |
| | | | US | 2022203536 A1 | 30-06-2022 |

EPO FORM P0459

For more details about this annex : see Official Journal of the European Patent Office, No. 12/82

page 1 of 2

## ANNEX TO THE EUROPEAN SEARCH REPORT
## ON EUROPEAN PATENT APPLICATION NO.

EP 25 20 8170

This annex lists the patent family members relating to the patent documents cited in the above-mentioned European search report.
The members are as contained in the European Patent Office EDP file on
The European Patent Office is in no way liable for these particulars which are merely given for the purpose of information.

26-02-2026

| Patent document cited in search report | Publication date | Patent family member(s) | Publication date |
|---|---|---|---|

EPO FORM P0459

For more details about this annex : see Official Journal of the European Patent Office, No. 12/82

page 2 of 2

**REFERENCES CITED IN THE DESCRIPTION**

**Patent documents cited in the description**

- IN 202421078734